# EUROPEAN PATENT APPLICATION

(11) **EP 4 760 518 A1**
(43) Date of publication of application: **17.06.2026**
(21) Application number: 24868798.0
(22) Date of filing: 19.09.2024
(51) Int. Cl.: G06F 13/42

(54) **INFORMATION COLLECTION DEVICE AND OPERATION METHOD THEREFOR**

(30) Priority: 20.09.2023 KR 20230125815
(71) Applicant: LG Energy Solution, Ltd., Seoul 07335 (KR)
(72) Inventor: LEE, Ye Seul, Daejeon 34122 (KR); YANG, Seong Yeol, Daejeon 34122 (KR)
(74) Representative: Plasseraud IP
(86) International application number: PCT/KR2024/096192
(87) International publication number: WO 2025/063824

(57) **Abstract**

An information collection device according to an embodiment disclosed in this document may comprise: a controller including a signal transmission port and a signal reception port; and a plurality of sensors connected to the signal transmission port and the signal reception port, wherein the controller may sequentially transmit and receive a wake-up signal, a transmission signal, and a reception signal to and from each of the plurality of sensors through the signal transmission port or the signal reception port.

## Description

### Technical Field

### CROSS-REFERENCE TO RELATED APPLICATION

This application claims priority to and the benefit of Korean Patent Application No. 10-2023-0125815 filed in the Korean Intellectual Property Office on September 20, 2023, the entire contents of which are incorporated herein by reference.

### TECHNICAL FIELD

Embodiments disclosed in this document relate to an information collection device and an operating method thereof.

### Background Art

Recently, research and development on secondary batteries have been actively conducted. Here, the secondary batteries are batteries that can be charged and discharged, and mean to include all of conventional Ni/Cd batteries and Ni/MH batteries, and recent lithium-ion batteries. The lithium-ion batteries among the secondary batteries are advantageous in that the energy density is much higher than those of the conventional Ni/Cd batteries and Ni/MH batteries. In addition, as the lithium-ion batteries may be manufactured to be small and lightweight, they are used as a power supply for mobile devices and draw attention recently as a next-generation energy storage medium as the scope of using the batteries has been expanded to power supplies of electric vehicles.

Various information on the batteries may be collected through sensors. In addition, information collected from the sensors may be integrated in an upper control device through an IO-Link device. The IO-Link device may mean a system that provides connectivity to actuators or sensors commonly used in machine automation. In the case of currently used control devices (MCU, Micro Controller Unit), as the number of ports is limited to 8, 8 IO-Link devices may be connected in maximum. However, as there are hundreds to thousands of sensors in a real situation, a method that can connect a large number of IO-Link devices is required.

### Disclosure

### Technical Problem

An object of the embodiments disclosed in this document is to provide an information collection device and an operating method thereof, which can increase the number of IO-Link ports that an upper controller may use.

Another object of the embodiments disclosed in this document is to provide an information collection device and an operating method thereof, which can increase the number of IO-Link ports that an upper controller may use by using a multiplexer, and provide a communication method for receiving information from a plurality of sensors through the multiplexer.

The technical problems of the embodiments disclosed in this document are not limited to the technical problems mentioned above, and unmentioned other technical problems will be clearly understood by those skilled in the art from the following descriptions.

### Technical Solution

An information collection device according to an embodiment disclosed in this document may comprise: a controller including a signal transmission port and a signal reception port; and a plurality of sensors connected to the signal transmission port and the signal reception port, wherein the controller may sequentially transmit and receive a wake-up signal, a transmission signal, and a reception signal to and from each of the plurality of sensors through the signal transmission port or the signal reception port.

In an embodiment, the controller may include a plurality of signal transmission ports and a plurality of signal reception ports, wherein each of the plurality of signal transmission ports and each of the plurality of signal reception ports may be connected to each of the plurality of sensors.

In an embodiment, the controller may sequentially transmit the wake-up signal to each of the plurality of sensors through each of the plurality of signal transmission ports, sequentially receive a response to the wake-up signal from each of the plurality of sensors through each of the plurality of signal reception ports when transmission of the wake-up signal is completed, and transmit and receive information to and from the plurality of sensors when the wake-up is completed.

In an embodiment, the controller may sequentially transmit the transmission signal to each of the plurality of sensors through each of the plurality of signal transmission ports when reception of the response to the wake-up signal is completed, and sequentially receive the reception signal from each of the plurality of sensors through each of the plurality of signal reception ports when transmission of the transmission signal is completed.

In an embodiment, the information collection device may further comprise a protocol change unit connected between each of the plurality of signal transmission ports and signal reception ports and each of the plurality of sensors to change a protocol.

In an embodiment, the plurality of signal transmission ports and the plurality of signal reception ports may include a UART protocol, and the protocol change unit may change the UART protocol and an IO Link protocol each other.

In an embodiment, the information collection device may further comprise: a first multiplexer (MUX) connected to the signal transmission ports; and a second multiplexer connected to the signal reception ports, wherein the first multiplexer and the second multiplexer may be connected to the plurality of sensors.

In an embodiment, the controller may sequentially transmit a port selection signal for selecting any one of n ports to the first multiplexer and the second multiplexer, sequentially select a port of the first multiplexer based on the port selection signal and sequentially transmit a wake-up signal to each of the plurality of sensors, select a port of the second multiplexer based on the port selection signal and sequentially receive a response to the wake-up signal from each of the plurality of sensors when sequential transmission of the wake-up signal is completed, and transmit and receive information to and from the plurality of sensors through the first multiplexer and the second multiplexer based on the port selection signal when reception of the response to the wake-up signal is completed.

In an embodiment, the controller may select a port of the first multiplexer based on the port selection signal and sequentially transmit the transmission signal to each of the plurality of sensors when reception of the response to the wake-up signal is completed, and select a port of the second multiplexer based on the port selection signal and sequentially receive the reception signal from each of the plurality of sensors when sequential transmission of the transmission signal is completed.

In an embodiment, the information collection device may further comprise a protocol change unit connected between the first and second multiplexers and the plurality of sensors to change a protocol.

In an embodiment, the signal transmission port and the signal reception port may include a UART protocol, and the protocol change unit may change the UART protocol and an IO Link protocol each other.

In an embodiment, the controller may include a plurality of signal transmission ports and a plurality of signal reception ports, wherein each of the plurality of signal transmission ports and each of the plurality of signal reception ports may be connected to a plurality of first multiplexers and a plurality of second multiplexers.

An operating method of an information collection device according to an embodiment disclosed in this document may comprise: an operation of sequentially transmitting a wake-up signal to each of a plurality of sensors and sequentially receiving a response to the wake-up signal through a signal transmission port or a signal reception port; and an operation of sequentially transmitting a transmission signal to each of the plurality of sensors and sequentially receiving a reception signal through the signal transmission port or the signal reception port, wherein the signal transmission port and the signal reception port may be connected to the plurality of sensors.

In an embodiment, the signal transmission port may include a plurality of signal transmission ports, and the signal reception port may include a plurality of signal reception ports, and the operation of sequentially transmitting a wake-up signal to each of a plurality of sensors and sequentially receiving a response to the wake-up signal through a signal transmission port or a signal reception port may include: an operation of sequentially transmitting the wake-up signal to each of the plurality of sensors through each of the plurality of signal transmission ports; and an operation of sequentially receiving a response to the wake-up signal from each of the plurality of sensors through each of the plurality of signal reception ports when transmission of the wake-up signal is completed.

In an embodiment, the operation of sequentially transmitting a transmission signal to each of the plurality of sensors and sequentially receiving a reception signal through the signal transmission port or the signal reception port may include: an operation of sequentially transmitting the transmission signal to each of the plurality of sensors through each of the plurality of signal transmission ports when reception of the response to the wake-up signal is completed; and an operation of sequentially receiving the reception signal from each of the plurality of sensors through each of the plurality of signal reception ports when transmission of the transmission signal is completed.

In an embodiment, the information collection device may further comprise: a first multiplexer (MUX) connected to the signal transmission ports; and a second multiplexer connected to the signal reception ports, wherein the first multiplexer and the second multiplexer may be connected to the plurality of sensors.

In an embodiment, the information collection method may further comprise an operation of sequentially transmitting a port selection signal for selecting any one of n ports to the first multiplexer and the second multiplexer.

In an embodiment, the operation of sequentially transmitting a wake-up signal to each of a plurality of sensors and sequentially receiving a response to the wake-up signal through a signal transmission port or a signal reception port may include: an operation of sequentially selecting a port of the first multiplexer based on the port selection signal and sequentially transmitting a wake-up signal to each of the plurality of sensors; and an operation of selecting a port of the second multiplexer based on the port selection signal and sequentially receiving a response to the wake-up signal from each of the plurality of sensors when sequential transmission of the wake-up signal is completed.

In an embodiment, the operation of sequentially transmitting a transmission signal to each of the plurality of sensors and sequentially receiving a reception signal through the signal transmission port or the signal reception port may include: an operation of selecting a port of the first multiplexer based on the port selection signal and sequentially transmitting the transmission signal to each of the plurality of sensors when reception of the response to the wake-up signal is completed; and an operation of selecting a port of the second multiplexer based on the port selection signal and sequentially receiving the reception signal from each of the plurality of sensors when sequential transmission of the transmission signal is completed.

In an embodiment, the information collection method may further comprise an operation of changing a protocol.

### Advantageous Effects

An information collection device and an operating method thereof according to an embodiment disclosed in this document may increase the number of sensors capable of collecting information from a controller through a multiplexer.

An information collection device and an operating method thereof according to an embodiment disclosed in this document may sequentially collect information from each of a plurality of sensors connected to a multiplexer by controlling an enable signal applied to the multiplexer.

In addition, an information collection device and an operating method thereof according to an embodiment disclosed in this document may prevent loss of information by sequentially transmitting signals through each port of a transmission multiplexer and sequentially receiving signals through each port of a reception multiplexer, prevent loss of time by efficiently performing communication, and expand the limited number of ports of IO-Link.

In addition, various effects directly or indirectly grasped may be provided through this document.

### Description of Drawings

FIG. 1 is a block diagram showing an information collection device according to an embodiment disclosed in this document.
FIG. 2 is a view specifically showing an information collection device according to an embodiment disclosed in this document.
FIG. 3 is a view showing an example of controlling communication of a plurality of ports by an information collection device according to an embodiment disclosed in this document.
FIG. 4 is a view showing an information collection device according to another embodiment disclosed in this document.
FIG. 5 is a view showing an example of controlling communication of a plurality of ports by an information collection device according to another embodiment disclosed in this document.
FIG. 6 is a flowchart illustrating an operating method of an information collection device according to an embodiment disclosed in this document.
FIG. 7 and FIG. 8 are flowcharts specifically illustrating an operating method of an information collection device according to an embodiment disclosed in this document.
FIG. 9 is a block diagram showing the hardware configuration of a computing system configured to perform an operating method of an information collection device according to an embodiment disclosed in this document.

### Mode for Invention

Hereinafter, embodiments disclosed in this document will be described in detail with reference to exemplary drawings. When adding reference numerals to the components in each drawing, it should be noted that the same numerals are given to identical components as much as possible although they are shown in different drawings. In addition, in describing the embodiments disclosed in this document, when a specific description of a related known configuration or function is determined to hinder understanding of the embodiments disclosed in this document, the detailed description thereof will be omitted.

In describing the components of the embodiments disclosed in this document, terms such as first, second, A, B, (a), (b), and the like may be used. These terms are intended only to distinguish the components from other components, and the nature, order, sequence, and the like of the components are not limited by these terms. In addition, unless otherwise defined, all terms used herein, including technical or scientific terms, have the same meaning as generally understood by those skilled in the art. Terms defined in commonly used dictionaries should be interpreted as having a meaning consistent with the meaning they have in the context of related techniques, and shall not be interpreted in an ideal or excessively formal sense, unless explicitly defined in this application.

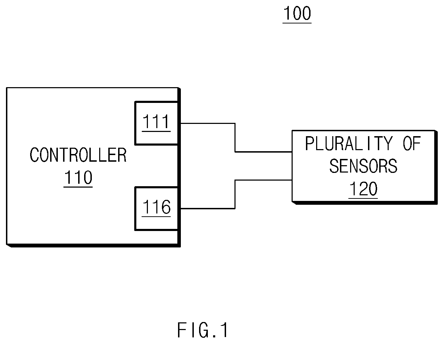

FIG. 1 is a block diagram showing an information collection device according to an embodiment disclosed in this document.

Referring to FIG. 1, an information collection device 100 according to an embodiment disclosed in this document may include a controller 110 and a plurality of sensors 120.

The controller 110 may include a signal transmission port and a signal reception port. For example, the controller 110 may include a first signal transmission port 111 and a first signal reception port 116. For example, the controller 110 may transmit signals through the first signal transmission port 111 and receive signals through the first signal reception port 116.

The controller 110 may sequentially transmit and receive a wake-up signal, a transmission signal, and a reception signal to and from each of the plurality of sensors 120 through the signal transmission port and the signal reception port. For example, the controller 110 may sequentially perform a series of processes for transmitting a wake-up signal, transmitting a transmission signal, and receiving a reception signal to and from each of the plurality of sensors 120.

The signal transmission port and the signal reception port may be connected to the plurality of sensors 120. For example, the first signal transmission port 111 and the first signal reception port 116 may be connected to the plurality of sensors 120. As another example, the signal transmission port may include a plurality of signal transmission ports, the signal reception port may include a plurality of signal reception ports, and each of the plurality of signal transmission ports and each of the plurality of signal reception ports may be connected to each of the plurality of sensors 120.

According to an embodiment, the plurality of signal transmission ports and the plurality of signal reception ports may correspond to each other and may be connected to any one among the plurality of sensors 120.

According to an embodiment, the plurality of sensors 120 may sense various information. For example, the plurality of sensors 120 may sense various information related to the battery. According to an embodiment, the plurality of sensors 120 may sense various information such as voltage, current, temperature, pressure, SOC, SOH, amount of generated gas and the like. However, the present invention is not limited thereto, and the plurality of sensors 120 may sense various information related to the battery or not related to the battery.

The controller 110 may transmit signals to the plurality of sensors 120 through the signal transmission port. For example, the controller 110 may transmit various signals, such as a signal for waking up the plurality of sensors 120, a signal for collecting information, a signal for collecting identification information, a signal for determining whether there is a failure, and the like, through the signal transmission port.

The controller 110 may receive signals from a plurality of sensors 120 through the signal reception port. For example, the controller 110 may receive various signals, such as a response signal responding to a wake-up signal, a response signal responding to a signal for collecting information, a response signal responding to a signal for collecting identification information, a response signal responding to a signal for determining whether there is a failure, and the like, from the plurality of sensors 120 through the signal reception port. According to an embodiment, the response signal responding to the wake-up signal may include a signal indicating that the wake-up is completed, the response signal responding to the signal for collecting information may include collection target information, the response signal responding to the signal for collecting identification information may include identification information of the sensor, and the response signal responding to the signal for determining whether there is a failure may include failure information.

That is, the controller 110 may transmit and receive one or more types of information to and from the plurality of sensors 120 through the signal transmission port and the signal reception port.

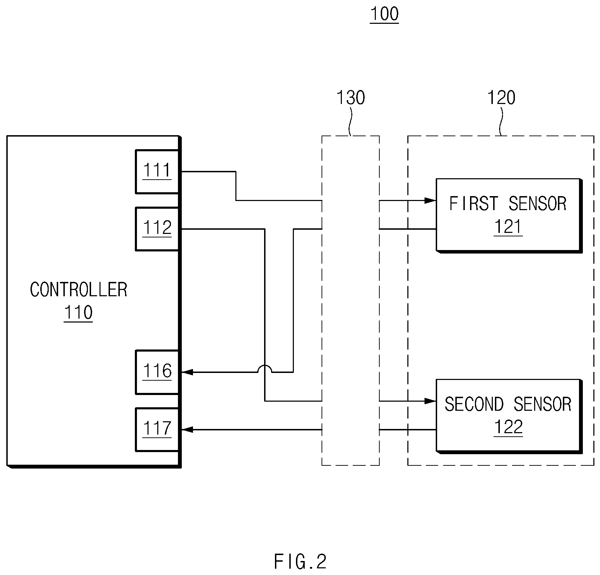

FIG. 2 is a view specifically showing an information collection device according to an embodiment disclosed in this document.

Referring to FIG. 2, the controller 110 may include a plurality of signal transmission ports 111 and 112 and a plurality of signal reception ports 116 and 117. In addition, the plurality of sensors 120 may include a first sensor 121 and a second sensor 122. In FIG. 2, the signal transmission port, the signal reception port, and the plurality of sensors are shown to include two signal transmission ports, two signal reception ports, and two sensors, respectively, but they are not limited thereto, and may include m signal transmission ports, m signal reception ports, and m sensors (m is a natural number).

The controller 110 may sequentially transmit and receive a wake-up signal, a transmission signal, and a reception signal to and from each of the plurality of sensors 120 through the signal transmission ports 111 and 112 and the signal reception ports 116 and 117.

The controller 110 may sequentially transmit a wake-up signal to each of the plurality of sensors 120 through each of the plurality of signal transmission ports 111 and 112, and when transmission of the wake-up signal is completed, the controller 110 may sequentially receive a response to the wake-up signal from each of the plurality of sensors 120 through the plurality of signal reception ports 116 and 117. According to an embodiment, the controller 110 may transmit a wake-up signal to the first sensor 121 through the first signal transmission port 111, transmit a wake-up signal to the second sensor 122 through the second signal transmission port 112, and then receive a response to the wake-up signal from the first sensor 121 through the first signal reception port 116, and receive a response to the wake-up signal from the second sensor 122 through the second signal reception port 117. Through the operation as described above, the controller 110 may reduce the time for waiting until a response is received after transmitting a wake-up signal to each of the plurality of sensors 120.

When the wake-up is completed, the controller 110 may transmit and receive information to and from the plurality of sensors 120. For example, when reception of a response to the wake-up signal is completed, the controller 110 may sequentially transmit a transmission signal to each of the plurality of sensors 120 through each of the plurality of signal transmission ports 111 and 112, and when transmission of the transmission signal is completed, the controller 110 may sequentially receive a reception signal from each of the plurality of sensors 120 through each of the plurality of signal reception ports 116 and 117. According to an embodiment, when reception of a response to the wake-up signal is completed, the controller 110 may transmit a transmission signal to the first sensor 121 through the first signal transmission port 111, transmit a transmission signal to the second sensor 122 through the second signal transmission port 112, receive a reception signal from the first sensor 121 through the first signal reception port 116, and receive a reception signal from the second sensor 122 through the second signal reception port 117. Through the operation as described above, the controller 110 may reduce the time for waiting until a response is received after transmitting a transmission signal to each of the plurality of sensors 120.

According to an embodiment, although FIG. 2 shows and describes a case where there are two signal transmission ports, two signal reception ports, and two sensors, the present invention is not limited thereto, and the controller 110 may sequentially transmit a wake-up signal to a plurality of sensors 120 through a plurality of signal transmission ports, sequentially receive a response to the wake-up signal from a plurality of sensors 120 through the plurality of signal reception ports, sequentially transmit a transmission signal to a plurality of sensors 120 through a plurality of signal transmission ports, and sequentially receive a reception signal from a plurality of sensors 120 through the plurality of signal reception ports.

According to an embodiment, the information collection device 100 may further include a protocol change unit 130 connected between each of the plurality of signal transmission ports 111 and 112 and signal reception ports 116 and 117 and each of the plurality of sensors 120 to change a protocol. For example, the plurality of signal transmission ports and the plurality of signal reception ports may include a UART protocol, and the protocol change unit 130 may change the UART protocol and the IO Link protocol each other. Accordingly, the protocol change unit 130 may change the protocol to efficiently transmit and receive information even when the controller 110 and the plurality of sensors 120 use different protocols.

According to an embodiment, there may be a plurality of protocol change units 130, and the protocol change unit 130 may be connected to each sensor included in the plurality of sensors 120. According to an embodiment, the protocol change unit 130 may include an IO Link transceiver.

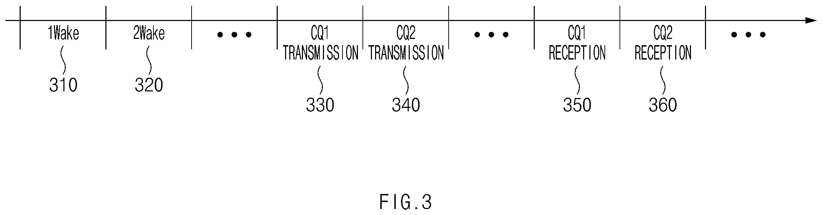

FIG. 3 is a view showing an example of controlling communication of a plurality of ports by an information collection device according to an embodiment disclosed in this document.

Referring to FIG. 3, the controller 110 of the information collection device 100 according to an embodiment disclosed in this document may transmit a wake-up signal to the first sensor (310) and transmit a wake-up signal to the second sensor (320) through the signal transmission ports. In addition, when transmission of the wake-up signal is completed, the controller 110 may sequentially receive responses to the wake-up signals from the first sensor and the second sensor through the signal reception ports.

When reception of the responses to the wake-up signals is completed, the controller 110 may transmit a transmission signal to the first sensor through the first signal transmission port (330), and transmit a transmission signal to the second sensor through the second signal transmission port (340).

When transmission of a transmission signal to each sensor is completed through each signal transmission port, the controller 110 may receive a reception signal from the first sensor through the first signal reception port (350), and receive a reception signal from the second sensor through the second signal reception port (360).

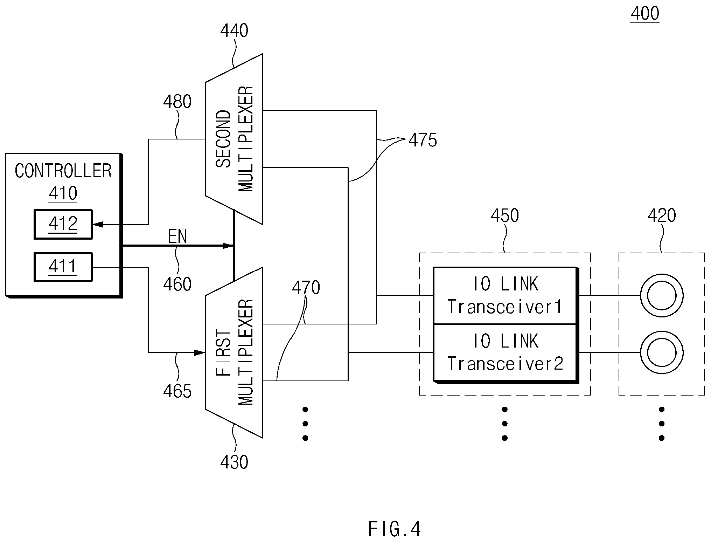

FIG. 4 is a view showing an information collection device according to another embodiment disclosed in this document.

An information collection device 400 according to another embodiment disclosed in this document may include a controller 410, a plurality of sensors 420, a first multiplexer 430, and a second multiplexer 440. According to an embodiment, the information collection device 400 may further include a protocol change unit 450.

The controller 410 may include a signal transmission port 411 and a signal reception port 412. For example, the controller 410 may transmit signals through the signal transmission port 411 and receive signals through the signal reception port 412.

The first multiplexer 430 may be connected to the signal transmission port 411. For example, the first multiplexer 430 may include a plurality of ports. As another example, the first multiplexer 430 may include n ports (n is a natural number). According to an embodiment, when a signal is received from the signal transmission port 411, the first multiplexer 430 may transmit the received signal to any one among the plurality of ports. According to an embodiment, the first multiplexer 430 may determine a port for transmitting a signal through an enable signal, and the enable signal may be received from the controller 410.

The second multiplexer 440 may be connected to the signal reception port 412. For example, the second multiplexer 440 may include a plurality of ports. As another example, the second multiplexer 440 may include n ports (n is a natural number). According to an embodiment, when a signal is received from any one among the plurality of ports, the second multiplexer 440 may transmit a signal to the signal reception port 412 of the controller 410. According to an embodiment, the second multiplexer 440 may determine a port for receiving a signal through an enable signal, and the enable signal may be received from the controller 410.

According to an embodiment, the first multiplexer 430 and the second multiplexer 440 may include the same number of ports.

The plurality of sensors 420 may be connected to the first multiplexer 430 and the second multiplexer 440. For example, each of the plurality of sensors 420 may be connected to each of the plurality of ports of the first multiplexer 430, and each of the plurality of sensors 420 may be connected to each of the plurality of ports of the second multiplexer 440. According to an embodiment, each port of the first multiplexer 430 and the second multiplexer 440 may correspond to each other and may be connected to any one among the plurality of sensors 420.

According to an embodiment, the plurality of sensors 420 may sense various information. For example, the plurality of sensors 420 may sense various information related to the battery. According to an embodiment, the plurality of sensors 420 may sense various information such as voltage, current, temperature, pressure, SOC, SOH, amount of generation, and the like. However, the present invention is not limited thereto, and the plurality of sensors 420 may sense various information related to the battery or not related to the battery.

The controller 410 may transmit signals to the plurality of sensors 420 through the signal transmission port and the first multiplexer 430. For example, the controller 410 may transmit various signals, such as a signal for waking up the plurality of sensors 420, a signal for collecting information, a signal for collecting identification information, a signal for determining whether there is a failure, and the like, through the signal transmission port and the first multiplexer 430.

The controller 410 may receive signals from a plurality of sensors 420 through the signal reception port and the second multiplexer 440. For example, the controller 410 may receive various signals, such as a response signal responding to a wake-up signal, a response signal responding to a signal for collecting information, a response signal responding to a signal for collecting identification information, a response signal responding to a signal for determining whether there is a failure, and the like, from the plurality of sensors 420 through the signal reception port and the second multiplexer 440. According to an embodiment, the response signal responding to the wake-up signal may include a signal indicating that the wake-up is completed, the response signal responding to the signal for collecting information may include collection target information, the response signal responding to the signal for collecting identification information may include identification information of the sensor, and the response signal responding to the signal for determining whether there is a failure may include failure information.

That is, the controller 410 may transmit and receive one or more types of information to and from the plurality of sensors 420 through the signal transmission port, the first multiplexer 430, the signal reception port, and the second multiplexer 440.

The protocol change unit 450 may be connected between the first and second multiplexers 430 and 440 and the plurality of sensors 420 and may change the protocol. For example, there may be a plurality of protocol change units 450, and each protocol change unit 450 may be connected to each sensor included in the plurality of sensors 420. According to an embodiment, the protocol change unit 450 may include an IO Link transceiver.

According to an embodiment, the signal transmission port and the signal reception port include a UART protocol, and the protocol change unit 450 may change the UART protocol and the IO Link protocol each other. Accordingly, the protocol change unit 450 may change the protocol so that information may be transmitted and received efficiently even when the controller 410 and the plurality of sensors 420 use different protocols.

According to an embodiment, the controller 410 may include a plurality of signal transmission ports and a plurality of signal reception ports. In this case, each of the plurality of signal transmission ports and each of the plurality of signal reception ports may be connected to a plurality of first multiplexers and a plurality of second multiplexers. For example, the controller 410 may include four signal transmission ports and four signal reception ports, and each of the four signal transmission ports and the four signal reception ports may be connected to four first multiplexers and four second multiplexers. That is, when eight ports are included in each of the first multiplexer and the second multiplexer, a total of 32 sensors may be connected to the controller 410. That is, according to the embodiments disclosed in this document, the information collection device 400 may effectively expand the limited number of ports of IO-Link.

The controller 410 may transmit a port selection signal for selecting one of the n ports to the first multiplexer 430 and the second multiplexer 440. For example, the port selection signal may include an enable signal. As another example, the controller 410 may transmit a signal for selecting one of the n ports to the first multiplexer 430 and the second multiplexer 440 through an enable signal line 460. For example, the first multiplexer 430 and the second multiplexer 440 may determine a port for transmitting or receiving signals among the n ports based on the signal received through the enable signal line 460. That is, the controller 410 may control ports to be used by the first multiplexer 430 and the second multiplexer 440 through the enable signal line 460.

The controller 410 may transmit a signal to the first multiplexer 430 through the signal transmission port 411 and a first transmission line 465. The first multiplexer 430 may transmit a signal to at least any one among the plurality of sensors 420 through the port selected through the enable signal and a second transmission line 470. According to an embodiment, before the signal is transmitted to the plurality of sensors 420, the protocol change unit 450 may change the protocol of the transmission signal, and transmit the signal to at least any one among the plurality of sensors 420.

At least any one sensor among the plurality of sensors 420 may transmit a response signal responding to the received signal to the second multiplexer 440 through the second reception line 475. In this case, the second multiplexer 440 may receive the response signal transmitted from the at least any one sensor through the port selected through the enable signal. The second multiplexer 440 may transmit the received response signal through a first reception line 480, and the controller 410 may receive the response signal from at least any one among the plurality of sensors 420 through the signal reception port 412 and the first reception line 480. According to an embodiment, when at least any one sensor among the plurality of sensors 420 transmits a signal, the protocol change unit 450 may change the protocol of the transmission signal and transmit the signal to the second multiplexer 440.

According to an embodiment, the controller 410 may sequentially wake up each of n ports included in the first multiplexer 430 and the second multiplexer 440, and sequentially transmit and receive signals to and from the sensors connected to the n ports based on the wake-up order.

According to an embodiment, the controller 410 may transmit a port selection signal for selecting one of the n ports to the first multiplexer 430 and the second multiplexer 440. The controller 410 may sequentially select a port of the first multiplexer 430 based on the port selection signal, and sequentially transmit a wake-up signal to each of the plurality of sensors 420. In addition, when the sequential transmission of the wake-up signal is completed, the controller 410 may select a port of the second multiplexer 440 based on the port selection signal, and sequentially receive a response to the wake-up signal from each of the plurality of sensors 420.

When reception of the response to the wake-up signal is completed, the controller 410 may transmit and receive information to and from the plurality of sensors through the first multiplexer 430 and the second multiplexer 440 based on the port selection signal. For example, when reception of the response to the wake-up signal is completed, the controller 410 may select a port of the first multiplexer 430 based on the port selection signal, and sequentially transmit a transmission signal to each of the plurality of sensors 420. In this case, when transmission of the transmission signal is completed, the controller 410 may select a port of the second multiplexer 440 based on the port selection signal, and sequentially receive a reception signal from each of the plurality of sensors 420.

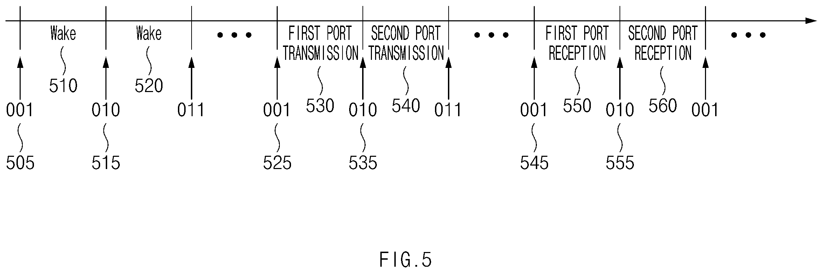

FIG. 5 is a view showing an example of controlling communication of a plurality of ports by an information collection device according to another embodiment disclosed in this document.

Referring to FIG. 5, the controller 410 may transmit a signal for selecting a first port of the first multiplexer 430 (505). In this case, the controller 410 may transmit a signal for waking up the first sensor (510). Thereafter, the controller 410 may transmit a signal for selecting a second port of the first multiplexer 430 (515), and transmit a signal for waking up the second sensor (520). According to an embodiment, the controller 410 may sequentially transmit a wake-up signal to all sensors by performing the operation described above.

The controller 410 may apply a port selection signal to the second multiplexer 440 in the same manner, and sequentially receive a response to the wake-up signal through the second multiplexer 440.

When reception of the response to the wake-up signal is completed, the controller 410 may transmit a signal for selecting the first port of the first multiplexer 430 (525), and transmit a transmission signal to the first sensor through the first port of the first multiplexer 430 (530). When transmission of the transmission signal to the first sensor is completed, the controller 410 may transmit a signal for selecting the second port of the first multiplexer 430 (535), and transmit a transmission signal to the second sensor through the second port of the first multiplexer 430 (540). According to an embodiment, the controller 410 may sequentially transmit a transmission signal to all sensors by performing the operation described above.

When transmission of the transmission signal is completed, the controller 410 may transmit a signal for selecting the first port of the second multiplexer 440 (545), and receive a reception signal from the first sensor through the first port of the second multiplexer 440 (550). When reception of the reception signal from the first sensor is completed, the controller 410 may transmit a signal for selecting the second port of the second multiplexer 440 (555), and receive a reception signal from the second sensor through the second port of the second multiplexer 440 (560). According to an embodiment, the controller 410 may sequentially receive a reception signal from all sensors by performing the operation described above.

The information collection device 100 according to an embodiment disclosed in this document may sequentially collect information from each of a plurality of sensors connected to a multiplexer by controlling the enable signal applied to the multiplexer.

In addition, the information collection device 100 according to an embodiment disclosed in this document may prevent loss of information by sequentially transmitting signals through each port of a transmission multiplexer and sequentially receiving signals through each port of a reception multiplexer, prevent loss of time by efficiently performing communication, and expand the limited number of ports of IO-Link.

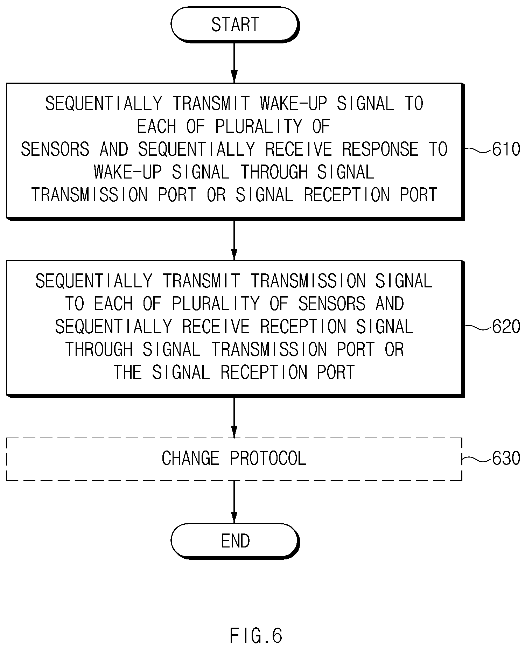

FIG. 6 is a flowchart illustrating an operating method of an information collection device according to an embodiment disclosed in this document. According to an embodiment, the operations illustrated in FIG. 6 may be performed through the information collection device 100 shown in FIG. 1 or FIG. 2.

Referring to FIG. 6, in operation 610, the controller 110 may sequentially transmit a wake-up signal to each of a plurality of sensors and sequentially receive a response to the wake-up signal through a signal transmission port and a signal reception port.

In operation 620, the controller 110 may sequentially transmit a transmission signal to each of the plurality of sensors and sequentially receive a reception signal through the signal transmission port and the signal reception port.

According to an embodiment, the signal transmission port and the signal reception port may be connected to the plurality of sensors 120.

According to an embodiment, the signal transmission port may include a plurality of signal transmission ports, and the signal reception port may include a plurality of signal reception ports. In this case, each of the plurality of signal transmission ports and each of the plurality of signal reception ports may be connected to each of the plurality of sensors 120.

In operation 630, the protocol change unit 150 may change the protocol. For example, when the protocols between the plurality of sensors 120 and the controller 110 are different, the protocol change unit 150 may change the protocols to transmit and receive signals to and from each other.

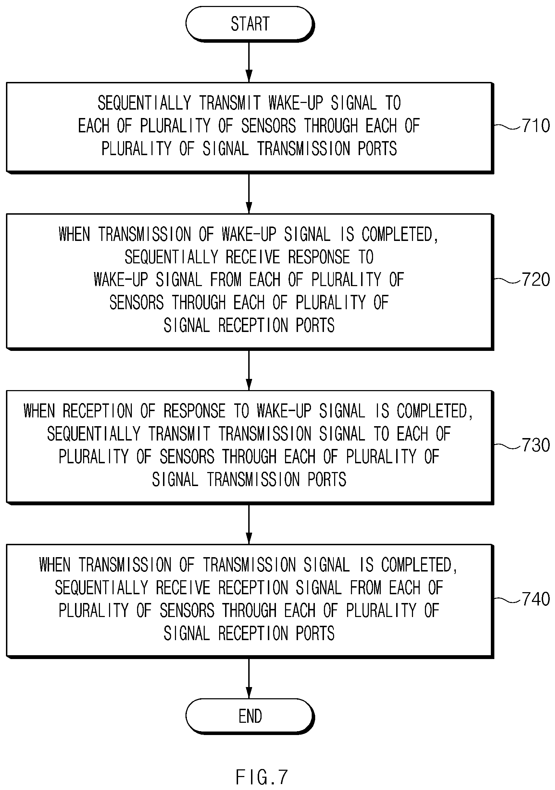

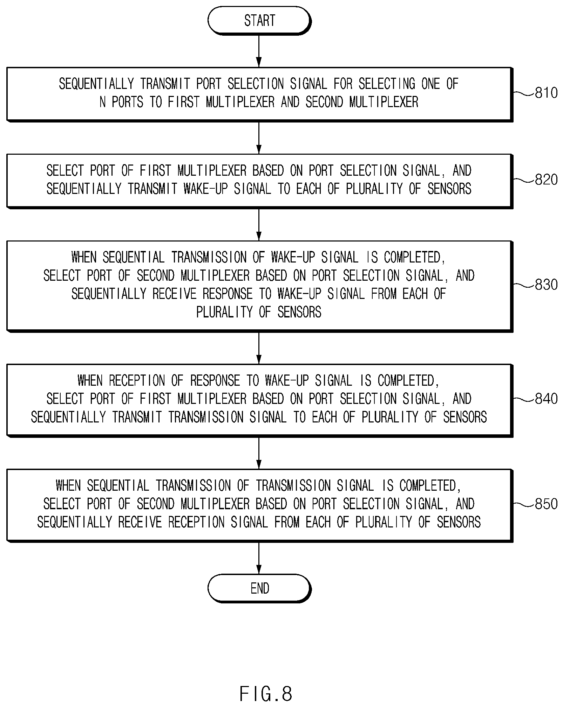

FIG. 7 and FIG. 8 are flowcharts specifically illustrating an operating method of an information collection device according to an embodiment disclosed in this document. According to an embodiment, the operations illustrated in FIG. 7 may be performed through the information collection device 100 shown in FIG. 1 or FIG. 2. According to an embodiment, the operations illustrated in FIG. 8 may be performed through the information collection device 400 shown in FIG. 4.

Referring to FIG. 7, in operation 710, the controller 110 may sequentially transmit a wake-up signal to each of the plurality of sensors 120 through each of the plurality of signal transmission ports.

In operation 720, when transmission of the wake-up signal is completed, the controller 110 may sequentially receive a response to the wake-up signal from each of the plurality of sensors 120 through each of the plurality of signal reception ports.

In operation 730, when reception of a response to the wake-up signal is completed, the controller 110 may sequentially transmit a transmission signal to each of the plurality of sensors 120 through each of the plurality of signal transmission ports.

In operation 740, when transmission of the transmission signal is completed, the controller 110 may sequentially receive a reception signal from each of the plurality of sensors 120 through each of the plurality of signal reception ports.

Referring to FIG. 8, in operation 810, the controller 410 may sequentially transmit a port selection signal for selecting any one of n ports to the first multiplexer 430 and the second multiplexer 440.

In operation 820, the controller 410 may select a port of the first multiplexer 430 based on the port selection signal, and sequentially transmit a wake-up signal to each of the plurality of sensors 420.

In operation 830, when sequential transmission of the wake-up signal is completed, the controller 410 may select a port of the second multiplexer 440 based on the port selection signal, and sequentially receive a response to the wake-up signal from each of the plurality of sensors 420.

In operation 840, when reception of the response to the wake-up signal is completed, the controller 410 may select a port of the first multiplexer 430 based on the port selection signal, and sequentially transmit a transmission signal to each of the plurality of sensors 420.

In operation 850, when sequential transmission of the transmission signal is completed, the controller 410 may select a port of the second multiplexer 440 based on the port selection signal, and sequentially receive a reception signal from each of the plurality of sensors 420.

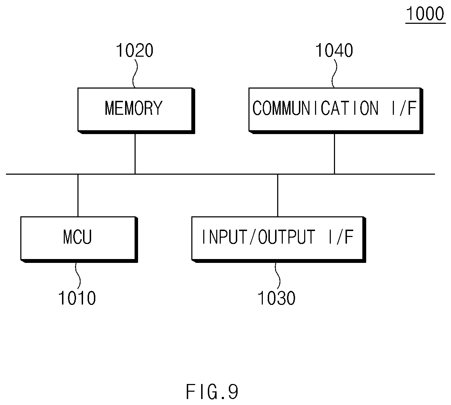

FIG. 9 is a block diagram showing the hardware configuration of a computing system configured to perform an operating method of an information collection device according to an embodiment disclosed in this document.

Referring to FIG. 9, a computing system 1000 according to an embodiment disclosed in this document may include an MCU 1010, a memory 1020, an input/output I/F 1030, and a communication I/F 1040.

The MCU 1010 may be a processor that executes various programs (e.g., an enable signal transmission/reception program, an information transmission/reception program, a multiplexer control program, and the like) stored in the memory 1020, processes various information including an enable signal, a communication signal, transmitted/received information, and the like through these programs, and performs the functions of the controller included in the information collection device shown in FIG. 1 described above.

The memory 1020 may store various programs such as an enable signal transmission/reception program, an information transmission/reception program, a multiplexer control program, and the like. In addition, the memory 1020 may store various information including an enable signal, a communication signal, transmitted/received information, and the like.

The memory 1020 may be provided in plurality as needed. The memory 1020 may be volatile memory or non-volatile memory. As the volatile memory, memories 1020 such as RAM, DRAM, SRAM, and the like may be used. As the non-volatile memory, memories 1020 such as ROM, PROM, EAROM, EPROM, EEPROM, flash memories, and the like may be used. The examples of the memories 1020 listed above are only examples, and they are not limited to these examples.

The input/output I/F 1030 may provide an interface that allows transmission and reception of data between an input device (not shown) such as a keyboard, a mouse, a touch panel, or the like and an output device (not shown) such as a display or the like, and the MCU 1010.

The communication I/F 1040 is a component that can transmit and receive various data to and from the server, and may be various devices that can support wired or wireless communication. For example, the information collection device may transmit and receive various information, including an enable signal, communication signals, and transmitted and received information, to and from a separately provided external server through the communication I/F 1040.

In this way, as the computer program according to an embodiment disclosed in this document is recorded in the memory 1020 and processed by the MCU 1010, it can be implemented, for example, as a module that performs each of the functions shown in FIG. 1

The above explanation only describes the technical spirit disclosed in this document as an example, and those skilled in the art in the art may make various changes and modifications without departing from the essential characteristics of the embodiments disclosed in this document.

Therefore, the embodiments disclosed in this document are not intended to limit but to explain the technical spirit of the embodiments disclosed in this document, and the scope of the technical spirit disclosed in this document is not limited by these embodiments. The protection scope of the technical spirit disclosed in this document should be interpreted by the claims provided below, and all technical spirits within the equivalent scope should be interpreted as being included in the scope of this document.

## Claims

1. An information collection device comprising:
a controller including a signal transmission port and a signal reception port; and
a plurality of sensors connected to the signal transmission port and the signal reception port, wherein
the controller sequentially transmits and receives a wake-up signal, a transmission signal, and a reception signal to and from each of the plurality of sensors through the signal transmission port or the signal reception port.

2. The information collection device according to claim 1, wherein the controller includes a plurality of signal transmission ports and a plurality of signal reception ports, wherein each of the plurality of signal transmission ports and each of the plurality of signal reception ports are connected to each of the plurality of sensors.

3. The information collection device according to claim 2, wherein the controller sequentially transmits the wake-up signal to each of the plurality of sensors through each of the plurality of signal transmission ports, sequentially receives a response to the wake-up signal from each of the plurality of sensors through each of the plurality of signal reception ports when transmission of the wake-up signal is completed, and transmits and receives information to and from the plurality of sensors when the wake-up is completed.

4. The information collection device according to claim 3, wherein the controller sequentially transmits the transmission signal to each of the plurality of sensors through each of the plurality of signal transmission ports when reception of the response to the wake-up signal is completed, and sequentially receives the reception signal from each of the plurality of sensors through each of the plurality of signal reception ports when transmission of the transmission signal is completed.

5. The information collection device according to claim 2, further comprising a protocol change unit connected between each of the plurality of signal transmission ports and signal reception ports and each of the plurality of sensors to change a protocol.

6. The information collection device according to claim 5, wherein the plurality of signal transmission ports and the plurality of signal reception ports include a UART protocol, and the protocol change unit changes the UART protocol and an IO Link protocol each other.

7. The information collection device according to claim 1, further comprising:
a first multiplexer (MUX) connected to the signal transmission ports; and
a second multiplexer connected to the signal reception ports, wherein
the first multiplexer and the second multiplexer are connected to the plurality of sensors.

8. The information collection device according to claim 7, wherein the controller sequentially transmits a port selection signal for selecting any one of n ports to the first multiplexer and the second multiplexer, sequentially selects a port of the first multiplexer based on the port selection signal and sequentially transmits a wake-up signal to each of the plurality of sensors, selects a port of the second multiplexer based on the port selection signal and sequentially receives a response to the wake-up signal from each of the plurality of sensors when sequential transmission of the wake-up signal is completed, and transmits and receives information to and from the plurality of sensors through the first multiplexer and the second multiplexer based on the port selection signal when reception of the response to the wake-up signal is completed.

9. The information collection device according to claim 8, wherein the controller selects a port of the first multiplexer based on the port selection signal and sequentially transmits the transmission signal to each of the plurality of sensors when reception of the response to the wake-up signal is completed, and selects a port of the second multiplexer based on the port selection signal and sequentially receives the reception signal from each of the plurality of sensors when sequential transmission of the transmission signal is completed.

10. The information collection device according to claim 7, further comprising a protocol change unit connected between the first and second multiplexers and the plurality of sensors to change a protocol.

11. The information collection device according to claim 10, wherein the signal transmission port and the signal reception port include a UART protocol, and the protocol change unit changes the UART protocol and an IO Link protocol each other.

12. The information collection device according to claim 7, wherein the controller includes a plurality of signal transmission ports and a plurality of signal reception ports, wherein each of the plurality of signal transmission ports and each of the plurality of signal reception ports are connected to a plurality of first multiplexers and a plurality of second multiplexers.

13. An operating method of an information collection device, the method comprising:
an operation of sequentially transmitting a wake-up signal to each of a plurality of sensors and sequentially receiving a response to the wake-up signal through a signal transmission port or a signal reception port; and
an operation of sequentially transmitting a transmission signal to each of the plurality of sensors and sequentially receiving a reception signal through the signal transmission port or the signal reception port, wherein
the signal transmission port and the signal reception port are connected to the plurality of sensors.

14. The operating method of the information collection device according to claim 13, wherein the signal transmission port includes a plurality of signal transmission ports, and the signal reception port includes a plurality of signal reception ports, and the operation of sequentially transmitting a wake-up signal to each of a plurality of sensors and sequentially receiving a response to the wake-up signal through a signal transmission port or a signal reception port includes:
an operation of sequentially transmitting the wake-up signal to each of the plurality of sensors through each of the plurality of signal transmission ports; and
an operation of sequentially receiving a response to the wake-up signal from each of the plurality of sensors through each of the plurality of signal reception ports when transmission of the wake-up signal is completed.

15. The operating method of the information collection device according to claim 14, wherein the operation of sequentially transmitting a transmission signal to each of the plurality of sensors and sequentially receiving a reception signal through the signal transmission port or the signal reception port includes:
an operation of sequentially transmitting the transmission signal to each of the plurality of sensors through each of the plurality of signal transmission ports when reception of the response to the wake-up signal is completed; and
an operation of sequentially receiving the reception signal from each of the plurality of sensors through each of the plurality of signal reception ports when transmission of the transmission signal is completed.

16. The operating method of the information collection device according to claim 13, wherein the information collection device further includes:
a first multiplexer (MUX) connected to the signal transmission ports; and
a second multiplexer connected to the signal reception ports, wherein
the first multiplexer and the second multiplexer are connected to the plurality of sensors.

17. The operating method of the information collection device according to claim 16, further comprising an operation of sequentially transmitting a port selection signal for selecting any one of n ports to the first multiplexer and the second multiplexer.

18. The operating method of the information collection device according to claim 17, wherein the operation of sequentially transmitting a wake-up signal to each of a plurality of sensors and sequentially receiving a response to the wake-up signal through a signal transmission port or a signal reception port includes:
an operation of sequentially selecting a port of the first multiplexer based on the port selection signal and sequentially transmitting a wake-up signal to each of the plurality of sensors; and
an operation of selecting a port of the second multiplexer based on the port selection signal and sequentially receiving a response to the wake-up signal from each of the plurality of sensors when sequential transmission of the wake-up signal is completed.

19. The operating method of the information collection device according to claim 18, wherein the operation of sequentially transmitting a transmission signal to each of the plurality of sensors and sequentially receiving a reception signal through the signal transmission port or the signal reception port includes:
an operation of sequentially selecting a port of the first multiplexer based on the port selection signal and sequentially transmitting the transmission signal to each of the plurality of sensors when reception of the response to the wake-up signal is completed; and
an operation of selecting a port of the second multiplexer based on the port selection signal and sequentially receiving the reception signal from each of the plurality of sensors when sequential transmission of the transmission signal is completed.

20. The operating method of the information collection device according to claim 13, further comprising an operation of changing a protocol.
